# FASCICULE DE BREVET EUROPEEN

(11) **EP 2 428 716 B1**
(45) Date de publication et mention de la délivrance du brevet: **22.06.2016**
(21) Numéro de dépôt: 11180051.2
(22) Date de dépôt: 05.09.2011
(51) Int. Cl.: F16L 11/11, B29C 49/00, B29C 47/00, B29L 23/18, B29L 23/00, B29K 21/00, B29C 47/12, B29K 27/18, B29K 67/00, B29K 75/00, B29K 77/00, F16L 11/15

(54) **Tuyau de transfert de fluide à portion(s) corruguée(s) et son procédé de fabrication**
Schlauch mit geriffelten Abschnitten zum Befördern von Flüssigkeiten und sein Herstellungsverfahren
Fluid transfer pipe with corrugated portion(s) and method for manufacturing same

(30) Priorité: 14.09.2010 IT MI20101671
(43) Date de publication de la demande: 14.03.2012
(73) Titulaire: Hutchinson, Srl, 10090 Rivoli (Turin) (IT)
(72) Inventeur: Bertero, Luciano, 10040 Rivalta di Torino (TURIN) (IT); Robasto, Mario, 10094 Giaveno (Torino) (IT); Jeanson, Romain, 10093 Collegno (Torino) (IT); Ramaro, Claudio, 10042 Nichelino (Torino) (IT)
(74) Mandataire: Gevers & Orès

(56) Documents cités:
- US-A- 3 693 664
- US-A- 3 751 541
- US-A- 4 357 190
- US-A- 6 021 816
- US-B1- 6 338 507
- US-S1- D 566 064

## Description

La présente invention concerne un tuyau de transfert de fluide en particulier pour la mise en charge d'un circuit de refroidissement de véhicule automobile, ce tuyau comprenant au moins une portion cintrable corruguée, et un procédé de fabrication de ce tuyau. L'invention s'applique d'une manière générale à des tuyaux cintrables réalisés en au moins un matériau thermoplastique et pouvant transférer tous fluides liquides (e.g. de l'eau ou un liquide de refroidissement pour moteur thermique) ou gazeux (e.g. de l'air).

De manière connue, les constructeurs automobiles imposent que les tuyaux de mise en charge de circuit de refroidissement supportent des débattements dans les trois directions ainsi que des vibrations, ce qui est obtenu par la présence d'ondulations ou corrugations définissant des reliefs et des creux sur la face externe de ces tuyaux, lesquels sont traditionnellement réalisés en caoutchouc pour des raisons de flexibilité en réponse aux débattements, ainsi que de tenue au fluide transporté et à sa température et pression de circulation.

Récemment et notamment pour des raisons économiques, on a cherché à réaliser de tels tuyaux corrugués en matériaux thermoplastiques pour ses zones fixes par rapport aux débattements, tout en conservant le caoutchouc pour les zones soumises à ces débattements, voire entièrement en un ou plusieurs matériaux thermoplastiques afin de réduire encore leur coût de fabrication.

On peut par exemple citer le document US-A-6 021 816 pour la description d'un tel tuyau corrugué entièrement thermoplastique, dont les reliefs en forme d'anneaux présentent des contours globalement arrondis de type elliptique, ovale ou circulaire, avec des décalages angulaires entre ces reliefs.

Le document US D566064S représente l'état de la technique le plus proche de l'objet de la revendication 1, il en divulgue le préambule et diffère par la forme spécifique des proéminences circonférentielles jointes.

Un inconvénient majeur des tuyaux thermoplastiques corrugués connus réside dans ces géométries arrondies pour les contours de ces reliefs annulaires qui, si elles favorisent la flexibilité du tuyau pour ses débattements, ont pour effet indésirable de conduire à un aplatissement et donc à un allongement de ces reliefs dans la direction axiale du tuyau, en raison des températures et/ou pressions élevées de fonctionnement.

Un but de la présente invention est de proposer un tuyau de transfert de fluide en particulier pour la mise en charge d'un circuit de refroidissement d'un moteur thermique de véhicule automobile qui permette de remédier à ces inconvénients, ce tuyau comprenant au moins une portion cintrable corruguée monocouche ou multicouches qui est à base d'au moins un matériau thermoplastique et qui comprend une succession de reliefs radiaux espacés axialement de sorte à former entre eux des creux, chaque relief présentant deux zones frontales réunies entre elles par une zone intermédiaire, les zones frontales de chaque relief présentant chacune un même contour globalement polygonal définissant au moins trois tronçons droits reliés entre eux par des tronçons arrondis, et les contours de ces reliefs successifs étant adaptés pour permettre le démoulage de ladite au moins une portion corruguée de deux coquilles hémicylindriques d'un moule suivant un unique plan de démoulage axial.

A cet effet, un tuyau selon l'invention est tel qu'au niveau desdits tronçons arrondis de chaque relief, lesdites deux zones frontales se rejoignent en ladite zone intermédiaire en formant pour chaque relief n (n entier égal ou supérieur à 3) bulbes convexes discontinus qui sont sensiblement en arc de cercle dans les directions circonférentielle et axiale.

Par contour « globalement polygonal », on entend dans la présente description un contour où les tronçons droits présentent une longueur supérieure à celle des tronçons arrondis.

On notera que ces tronçons droits associés pour chaque relief à ces tronçons arrondis formés par ces bulbes convexes discontinus (cette convexité des bulbes étant non seulement circonférentielle mais en outre axiale) permettent d'assurer un compromis satisfaisant entre, d'une part, la flexibilité du tuyau dans sa ou des portions cintrées soumises à des débattements grâce à la présence de ces tronçons arrondis et, d'autre part, une résistance efficace à l'allongement des reliefs dans la direction axiale du tuyau grâce à ces tronçons droits, contrairement aux reliefs globalement arrondis de l'art antérieur qui sont le siège d'allongements axiaux.

Selon une autre caractéristique de l'invention relative à ladite ou chaque portion corruguée, les contours respectifs desdits reliefs sont identiques et décalés angulairement d'un relief à l'autre.

On notera que la condition essentielle précitée pour chaque contour, qui est d'autoriser le démoulage du tuyau suivant un seul plan de démoulage entre les deux coquilles identiques du moule, implique que les contours respectifs des reliefs sont axisymétriques.

Selon une autre caractéristique de l'invention, le contour de chaque relief peut définir sensiblement un polygone régulier convexe à n côtés (n entier égal ou supérieur à 3) et à n sommets tronqués formés par lesdits tronçons arrondis, et les reliefs se succèdent alors en alternance suivant un même décalage angulaire de π/n radians en définissant deux positions angulaires pour les polygones de l'ensemble de ces reliefs.

On notera ainsi qu'un décalage angulaire entre deux reliefs consécutifs correspondant à un angle différent de π/n radians - par exemple π/8 radians pour un polygone régulier tronqué autre qu'un octogone - n'est pas utilisable pour réaliser la ou chaque portion corruguée d'un tuyau selon l'invention par moulage au moyen d'une extrusion-soufflage d'au moins un plastomère et/ou élastomère thermoplastique d'une extrudeuse vers un moule à deux coquilles hémicylindriques mobiles, ces coquilles définissant un plan de démoulage axial pour le tuyau.

De préférence, ce contour en forme de polygone régulier tronqué est choisi tel que n est inclusivement compris entre 3 et 8, i.e. un contour en forme de triangle équilatéral, de carré, de pentagone, d'hexagone, d'heptagone ou d'octogone réguliers.

Comme indiqué précédemment, ces sommets tronqués assurent la flexibilité de la ou de chaque portion corruguée, alors que les côtés de chaque polygone ainsi tronqué permettent de minimiser l'allongement axial des reliefs après une durée d'utilisation donnée.

De préférence, les contours desdits reliefs présentent chacun un nombre n pair de côtés, étant par exemple des carrés tronqués décalés en alternance selon un angle de π/4 radians ou bien des hexagones réguliers tronqués décalés selon un angle de π/6 radians.

On notera que ces polygones à nombre pair de côtés permettent avantageusement de faciliter le cintrage du tuyau.

Selon une autre caractéristique de l'invention, au niveau desdits tronçons droits, les zones frontales de chaque relief sont coplanaires et forment des plats définissant n fonds discontinus de chaque creux séparant deux dits bulbes consécutifs entre eux dans la direction circonférentielle (alors que, comme indiqué ci-dessus, les deux zones frontales de chaque relief sont toutes deux convexes dans la direction axiale au niveau desdits tronçons arrondis pour former ces bulbes).

Selon une autre caractéristique de l'invention, lesdits reliefs peuvent être séparés deux à deux entre eux par une portion lisse périphérique interstitielle de ladite au moins une portion corruguée, ces reliefs étant dépourvus de ponts axiaux les reliant deux à deux entre eux.

On notera que les n bulbes ainsi formés sur chaque relief sont formés de manière discontinue, i.e. que la ou chaque portion corruguée ne comprend aucun bulbe continu circonférentiellement en forme d'annelure, contrairement à l'art antérieur.

Avantageusement, un tuyau selon l'invention peut être moulé par extrusion-soufflage d'au moins un plastomère et/ou élastomère thermoplastique dans un moule à deux coquilles définissant un plan de démoulage axial pour le tuyau.

Selon un exemple de réalisation de l'invention, ladite au moins une portion corruguée comprend une couche interne par exemple réalisée en un élastomère thermoplastique et une couche externe par exemple réalisée en un plastomère, l'ensemble des couches présentant lesdits reliefs et lesdits creux dans cette portion corruguée.

Selon une variante de l'invention, ladite au moins une portion corruguée peut comporter une portion tubulaire interne lisse et une portion tubulaire externe corruguée qui définit lesdits reliefs et lesdits creux et qui recouvre cette portion interne en en étant solidaire (par exemple par un assemblage de type fusion).

Le procédé de fabrication selon l'invention d'un tuyau tel que défini ci-dessus comprend un moulage par extrusion-soufflage d'au moins un plastomère et/ou élastomère thermoplastique d'une extrudeuse vers un moule à deux coquilles hémicylindriques mobiles, ces coquilles définissant un plan de démoulage axial pour le tuyau.

A titre de plastomères, on peut par exemple utiliser des polyamides (e.g. PA6, PA11 ou PA12), des polyesters (e.g. PET ou PBT), des polyoléfines (e.g. polyéthylènes), des polyuréthannes ou des polytétrafluoroéthylènes (PTFE), à titre non limitatif.

A titre d'élastomères thermoplastiques (TPE), on peut par exemple utiliser des élastomères thermoplastiques oléfiniques (TPO), des vulcanisats thermoplastiques (TPV) ou des polyuréthannes thermoplastiques (TPU), à titre non limitatif.

Selon un mode de réalisation de l'invention commun à l'ensemble des caractéristiques précitées pour le tuyau, lesdits reliefs sont chacun centrés sur un plan transversal perpendiculaire à l'axe longitudinal de symétrie du tuyau (i.e. chaque relief fait un angle de π/2 radians avec cet axe).

En variante, ces reliefs selon l'invention peuvent être chacun centrés sur un plan faisant avec l'axe longitudinal de symétrie du tuyau un angle compris entre π/6 et π/2 radians, de sorte que le profil choisi pour ces reliefs permette, comme indiqué ci-dessus, la réalisation du tuyau par cette extrusion-soufflage d'une extrudeuse vers un moule à deux coquilles hémicylindriques mobiles définissant un plan de démoulage axial pour le tuyau.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique latérale en élévation d'une portion corruguée d'un tuyau selon un exemple de l'invention,
la figure 2 est une vue en coupe transversale de cette portion corruguée suivant le plan II-II de la figure 1,
la figure 3 est une vue en coupe transversale de cette portion corruguée suivant le plan III-III de la figure 1,
la figure 4 est une vue schématique frontale de droite de cette portion corruguée de la figure 1,
la figure 5 est une vue en coupe axiale de cette portion corruguée selon le plan V-V de la figure 1,
la figure 6 est une vue schématique latérale et en perspective de cette même portion corruguée de la figure 1,
la figure 7 est une vue schématique frontale d'une portion corruguée selon l'invention suivant une variante de la figure 4,
la figure 8 est une vue schématique frontale d'une portion corruguée selon l'invention suivant une autre variante de la figure 4, et
la figure 9 est une vue schématique frontale d'une portion corruguée selon l'invention suivant encore une autre variante de la figure 4,
la figure 10 est une vue en perspective latérale d'un tuyau selon l'invention de mise en charge d'un circuit de refroidissement de moteur thermique, comprenant plusieurs portions corruguées telles que celles des figures 1 à 9,
la figure 11 est un schéma montrant le fonctionnement d'une installation de fabrication d'un tuyau selon l'invention tel que celui de la figure 10,
la figure 12 est une vue schématique partielle en demi-section axiale de l'une des deux coquilles d'un moule d'extrusion-soufflage de cette installation recevant l'extrudat destiné à former la portion corruguée, et
la figure 13 est une vue de détail en demi-section axiale de la zone encadrée visible à la figure 12 illustrant notamment la sortie de l'extrudat hors de la filière, à l'intérieur de cette coquille du moule.

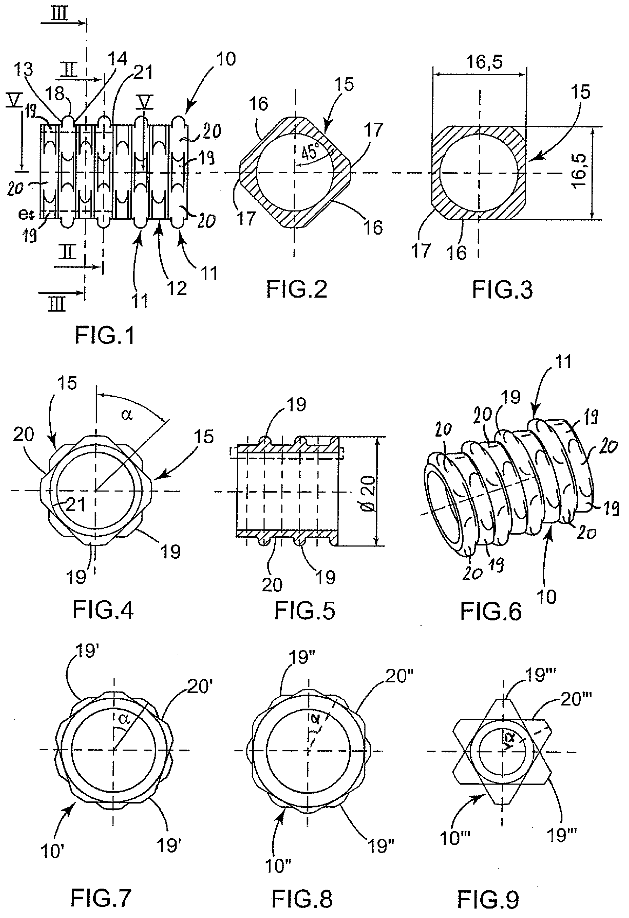

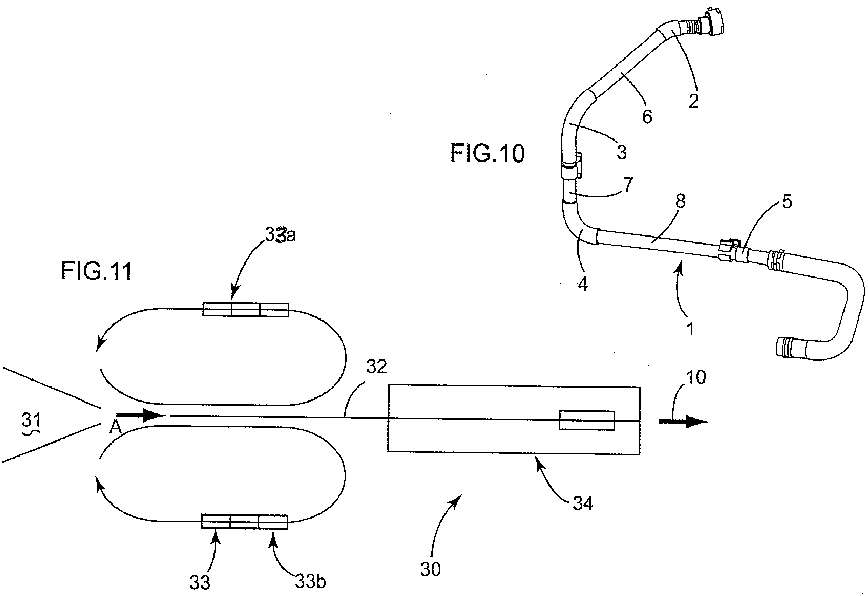

Un tuyau 1 selon l'invention est illustré à la figure 10, ce tuyau étant de préférence réalisé par extrusion-soufflage d'au moins un matériau thermoplastique et comprenant dans cet exemple plusieurs portions corruguées et cintrées ou cintrables 2, 3, 4, 5 qui sont reliées entre elles par des portions lisses et droites 6, 7, 8 et qui sont chacune visibles de manière précise aux figures 1 à 9. Ce tuyau 1 est de type monocouche ou multicouches, pouvant comprendre dans ce dernier cas une couche radialement interne à base d'un élastomère thermoplastique, tel qu'un TPV, et une couche radialement externe à base d'un plastomère, tel qu'un polyamide, à titre non limitatif.

Comme visible aux figures 1, 5 et 6, chaque portion corruguée 2 à 5 du tuyau 1 définit une structure tubulaire 10 présentant une pluralité de reliefs radiaux 11 qui se succèdent axialement en étant séparés deux à deux entre eux par des creux 12 sensiblement plats et qui sont chacun discontinus dans la direction circonférentielle. Plus précisément, chaque relief 11 présente deux zones frontales respectivement avant 13 et arrière 14 qui présentent chacune un même contour 15 en forme de polygone régulier convexe à n côtés plats 16, tronqué en ses sommets par n tronçons arrondis 17 (n entier égal ou supérieur à 3), ces zones 13 et 14 étant réunies entre elles par une zone intermédiaire circonférentielle 18.

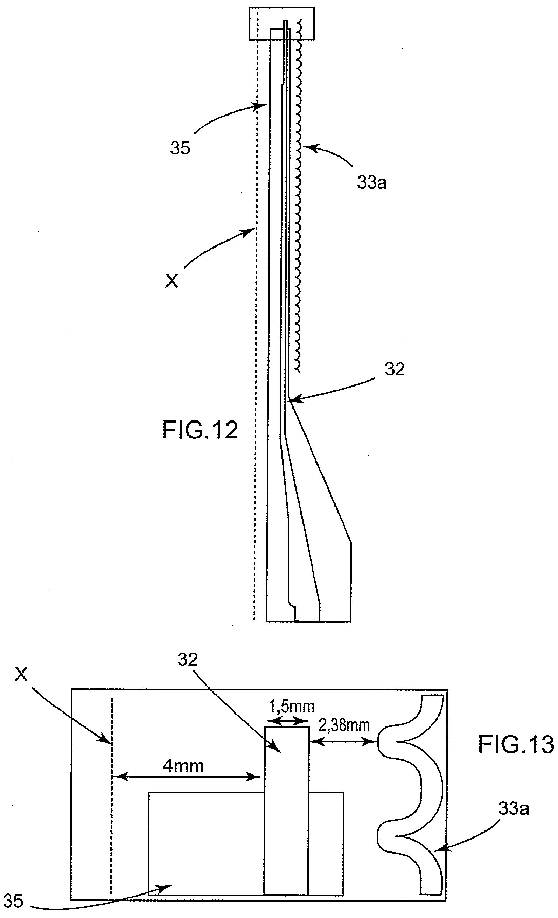

Comme illustré aux figures 2 à 4, les contours respectifs 15 des reliefs 11 sont identiques mais décalés angulairement entre les reliefs 11 deux à deux consécutifs d'un même angle α de π/n radians en définissant ainsi, en alternance sur la longueur de la portion 10, deux uniques positions angulaires pour ces polygones 15, ce qui autorise le démoulage du tuyau selon un unique plan de joint entre les deux coquilles du moule d'extrusion-soufflage (voir figures 12 et 13). Dans cet exemple des figures 2 à 4, les contours 15 sont des carrés (n = 4) tronqués par quatre sommets 17 légèrement arrondis et convexes, soit un angle de décalage entre les contours 15 de π/4 radians (soit 45°).

On voit notamment aux figures 1 et 4 qu'en chaque relief 11, les tronçons arrondis 17 forment entre eux n bulbes 19 convexes (voir figure 5 pour cette convexité dans la direction axiale) discontinus de section en arc de cercle (tant dans les directions axiale que circonférentielle) qui sont reliés deux à deux entre eux dans la direction circonférentielle par des plats 20 définis par les côtés 16 de chaque polygone 15. Ces plats 20, également discontinus sur la circonférence de chaque relief 11, forment ainsi une partie axialement centrale du fond de chaque creux 12, lequel est complété de part et d'autre de ces plats 20 par deux portions lisses circonférentielles continues 21 de faible largeur axiale (voir figure 1).

A titre illustratif et non limitatif, on a indiqué aux figures 3 et 5 la distance séparant deux côtés plats opposés 16 du carré 15 (16,5 mm) et celle séparant deux bulbes 19 opposés (20 mm, soit la diagonale du carré tronqué 15). Quant à l'épaisseur e des portions lisses 21, elle est dans l'exemple de la figure 1 d'environ 1,75 mm.

Les variantes de portions corruguées 10', 10", 10"' selon les figures 7, 8 et 9 illustrent respectivement des reliefs qui sont en forme de :
- pentagones réguliers avec n = 5 plats 20' reliés entre eux par autant de bulbes 19' (soit α = π/5 radians),
- d'hexagones réguliers à n = 6 plats 20" reliés entre eux par autant de bulbes19" (soit α = π/6 radians), et
- de triangles équilatéraux à n = 3 plats 20'" reliés entre eux par autant de bulbes 19"' (soit α = π/3 radians).

Pour fabriquer un tuyau 1 incorporant de telles portions corruguées 10 à 10'" telles que les portions 2 à 5 de la figure 10, on utilise avantageusement une installation d'extrusion-soufflage 30 telle que celle de la figure 11, avec en amont une extrudeuse 31 destinée à amener l'extrudat 32 selon la direction A dans une machine 33 apte à former des corrugations sur un tuyau (« corrugator » en anglais) et formée de deux chaînes de coquilles hémicylindriques 33a et 33b (« mould chains » en anglais) qui sont mobiles sur des convoyeurs sans fin selon des sens de rotation opposés et qui forment l'une contre l'autre un moule cylindrique, pour l'obtention de chaque portion corruguée 10 à 10'" après coupe dans une unité de coupe 34 située en aval de la machine 33.

On a illustré schématiquement aux figures 12 et 13 une géométrie possible de la filière 35 de l'extrudeuse 31 d'axe de rotation X, en relation avec une coquille 33a du moule d'extrusion-soufflage recevant l'extrudat 32.

La Demanderesse a soumis des tuyaux 1 multicouches (notamment à couche interne à base de TPV « Santoprène » et à couche externe à base de PA12) incorporant des portions corruguées telles que celles des figures 1 à 9 à des essais dans les conditions usuelles de débattements et de température et de pression des fluides de refroidissement transportés, essais qui ont notamment démontré la résistance améliorée à l'allongement axial des reliefs de ces portions corruguées via des tests de stabilité dimensionnelle (mis en oeuvre après un vieillissement de 2 heures à 118° C, puis de 30 minutes à 135° C à 1,4 bars de pression, avec un fluide constitué d'un mélange 50/50 de glycol et d'eau) en comparaison de tuyaux corrugués connus, et ont en outre conduit à une résistance améliorée à la pression du fluide pour ces tuyaux 1 (pression d'éclatement à 118° C : 7,8 bars environ) par rapport à ces tuyaux connus.

## Revendications

1. Tuyau (1) de transfert de fluide en particulier pour la mise en charge d'un circuit de refroidissement d'un moteur thermique de véhicule automobile, comprenant au moins une portion cintrable corruguée (2, 3, 4, 5, 10, 10', 10", 10"') monocouche ou multicouches qui est à base d'au moins un matériau thermoplastique et qui comprend une succession de reliefs (11) radiaux espacés axialement de sorte à former entre eux des creux (12), chaque relief présentant deux zones frontales (13 et 14) réunies entre elles par une zone intermédiaire (18), les zones frontales de chaque relief présentant chacune un même contour (15) globalement polygonal définissant au moins trois tronçons droits (16) reliés entre eux par des tronçons arrondis (17), et les contours de ces reliefs successifs étant adaptés pour permettre le démoulage de ladite au moins une portion corruguée de deux coquilles hémicylindriques (33a et 33b) d'un moule suivant un unique plan de démoulage axial, **caractérisé en ce qu'**au niveau desdits tronçons arrondis de chaque relief, lesdites deux zones frontales se rejoignent en ladite zone intermédiaire en formant pour chaque relief n , n étant entier égal ou supérieur à 3, bulbes (19, 19', 19", 19"') convexes discontinus qui sont sensiblement en arc de cercle dans les directions circonférentielle et axiale.

2. Tuyau (1) selon la revendication 1, **caractérisé en ce que** les contours respectifs (15) desdits reliefs (11) sont identiques et décalés angulairement d'un relief à l'autre.

3. Tuyau (1) selon la revendication 2, **caractérisé en ce que** le contour (15) de chaque relief (11) définit sensiblement un polygone régulier convexe à n côtés (16) (n entier égal ou supérieur à 3) et à n sommets tronqués formés par lesdits tronçons arrondis (17), et **en ce que** les reliefs se succèdent en alternance suivant un même décalage angulaire (α) de π/n radians en définissant deux positions angulaires pour les polygones (15) de l'ensemble de ces reliefs.

4. Tuyau (1) selon la revendication 3, **caractérisé en ce que** les contours (15) desdits reliefs (11) présentent chacun un nombre n pair de côtés (16), étant par exemple des carrés tronqués décalés en alternance selon un angle (α) de π/4 radians ou bien des hexagones réguliers tronqués décalés selon un angle (α) de π/6 radians.

5. Tuyau (1) selon une des revendications précédentes, **caractérisé en ce qu'**au niveau desdits tronçons droits (16), les zones frontales de chaque relief sont coplanaires et forment des plats (20, 20', 20", 20"') définissant n fonds discontinus de chaque creux (12) séparant deux dits bulbes consécutifs entre eux dans la direction circonférentielle.

6. Tuyau (1) selon une des revendications précédentes, **caractérisé en ce que** lesdits reliefs (11) sont séparés deux à deux entre eux par une portion lisse périphérique interstitielle (21) de ladite au moins une portion corruguée (2, 3, 4, 5, 10, 10', 10", 10"'), ces reliefs étant dépourvus de ponts axiaux les reliant deux à deux entre eux.

7. Tuyau (1) selon une des revendications précédentes, **caractérisé en ce qu'**il est moulé par extrusion-soufflage d'au moins un plastomère et/ou élastomère thermoplastique dans un moule à deux coquilles (33a et 33b) définissant un plan de démoulage axial pour le tuyau.

8. Tuyau (1) selon une des revendications précédentes, **caractérisé en ce que** ladite au moins une portion corruguée (2, 3, 4, 5, 10, 10', 10", 10"') comprend une couche interne par exemple réalisée en un élastomère thermoplastique et une couche externe par exemple réalisée en un plastomère, l'ensemble des couches de cette portion corruguée présentant lesdits reliefs (11) et lesdits creux (12).

9. Tuyau (1) selon une des revendications 1 à 7, **caractérisé en ce que** ladite au moins une portion corruguée (2, 3, 4, 5, 10, 10', 10", 10"') comporte une portion tubulaire interne lisse et une portion tubulaire externe corruguée qui définit lesdits reliefs (11) et lesdits creux (12) et qui recouvre cette portion interne en en étant solidaire.

10. Tuyau (1) selon une des revendications 1 à 9, **caractérisé en ce que** lesdits reliefs (11) sont chacun centrés sur un plan transversal perpendiculaire à l'axe longitudinal de symétrie du tuyau.

11. Tuyau selon une des revendications 1 à 9, **caractérisé en ce que** lesdits reliefs sont chacun centrés sur un plan faisant avec l'axe longitudinal de symétrie du tuyau un angle compris entre π/6 et π/2 radians.

12. Procédé de fabrication d'un tuyau (1) selon une des revendications précédentes, **caractérisé en ce qu'**il comprend un moulage par extrusion-soufflage d'au moins un plastomère et/ou élastomère thermoplastique d'une extrudeuse (31) vers un moule à deux coquilles hémicylindriques (33a et 33b) mobiles, ces coquilles définissant un plan de démoulage axial pour le tuyau.

## Patentansprüche

1. Fluidübertragungsrohr (1), insbesondere für die Belastung eines Kühlkreislaufs eines Verbrennungsmotors eines Kraftfahrzeugs, das mindestens einen gewellten biegsamen Abschnitt (2, 3, 4, 5, 10, 10', 10", 20"') aus einer Schicht oder aus mehreren Schichten auf Basis von mindestens einem thermoplastischen Material umfasst und das eine Folge von radialen Reliefs (11) umfasst, die derart axial beabstandet sind, dass zwischen ihnen Hohlräume (12) gebildet sind, wobei jedes Relief zwei stirnseitige Zonen (13 und 14) aufweist, die untereinander durch eine Zwischenzone (18) verbunden sind, wobei die stirnseitigen Zonen jedes Reliefs jeweils eine gleiche Kontur (15) aufweisen, die allgemein vieleckig ist und mindestens drei gerade Teilstücke (16) definiert, die untereinander durch abgerundete Teilstücke (17) verbunden sind, und die Konturen dieser aufeinanderfolgenden Reliefs angepasst sind, um das Ausformen des mindestens einen gewellten Abschnitts von zwei halbzylindrischen Dauerformen (33a und 33b) einer Gießform entlang einer einzigen axialen Ausformebene zu ermöglichen, **dadurch gekennzeichnet, dass** im Bereich der abgerundeten Teilstücke von jedem Relief die zwei stirnseitigen Zonen sich in der Zwischenzone vereinigen, indem sie für jedes Relief n, wobei n eine ganze Zahl gleich oder größer als 3 ist, diskontinuierliche konvexe Wulste (19, 19', 19", 19"') bildet, die in der Umfangs- und axialen Richtung im Wesentlichen kreisbogenförmig sind.

2. Rohr (1) nach Anspruch 1, **dadurch gekennzeichnet, dass** die jeweiligen Konturen (15) der Reliefs (11) identisch und von einem Relief zum anderen winkelig versetzt sind.

3. Rohr (1) nach Anspruch 2, **dadurch gekennzeichnet, dass** die Kontur (15) von jedem Relief (11) im Wesentlichen ein konvexes regelmäßiges Vieleck mit n Seiten (16) (wobei n eine ganze Zahl gleich oder größer als 3 ist) und mit n abgeschnittenen Eckpunkten definiert, die durch die abgerundeten Teilstücke (17) gebildet sind, und dadurch, dass die Reliefs abwechselnd gemäß einem gleichen winkligen Versatz (α) von π/n Radianten durch Definieren von zwei Winkelpositionen für die Vielecke (15) der Menge dieser Reliefs aufeinander folgen.

4. Rohr (1) nach Anspruch 3, **dadurch gekennzeichnet, dass** die Konturen (15) der Reliefs (11) jeweils eine gerade Anzahl n von Seiten (16) aufweisen, die zum Beispiel abgeschnittene Quadrate sind, die abwechselnd gemäß einem Winkel (α) von π/4 Radianten versetzt sind, oder abgeschnittene regelmäßige Sechsecke sind, die gemäß einem Winkel (α) von π/6 Radianten versetzt sind.

5. Rohr (1) nach einem der vorhergehenden Ansprüche, **dadurch gekennzeichnet, dass** im Bereich der geraden Teilstücke (16) die stirnseitigen Zonen jedes Reliefs koplanar sind und flache Teile (20, 20', 20", 20"') bilden, die n diskontinuierliche Böden von jedem Hohlraum (12) bilden, die zwei der aufeinanderfolgenden Wulste voneinander in der Umfangsrichtung trennen.

6. Rohr (1) nach einem der vorhergehenden Ansprüche, **dadurch gekennzeichnet, dass** die Reliefs (11) paarweise voneinander durch einen glatten umlaufenden Zwischenabschnitt (21) von dem mindestens einen gewellten Abschnitt (2, 3, 4, 5, 10, 10', 10", 10"') getrennt sind, wobei diese Reliefs keine axialen Brücken aufweisen, die sie paarweise untereinander verbinden.

7. Rohr (1) nach einem der vorhergehenden Ansprüche, **dadurch gekennzeichnet, dass** es durch Extrusionsblasen von mindestens einem Plastomer und/oder thermoplastischen Elastomer in einer Form mit zwei Dauerformen (33a und 33b) geformt wird, die eine axiale Ausformebene für das Rohr bilden.

8. Rohr (1) nach einem der vorhergehenden Ansprüche, **dadurch gekennzeichnet, dass** der mindestens eine wellige Teil (2, 3, 4, 5, 10, 10', 10", 10"') eine innere Schicht, die zum Beispiel aus einem thermoplastischen Elastomer ausgeführt ist, und eine äußere Schicht umfasst, die zum Beispiel aus einem Plastomer ausgeführt ist, wobei die Menge der Schichten dieses welligen Abschnitts die Reliefs (11) und die Hohlräume (12) aufweist.

9. Rohr (1) nach einem der Ansprüche 1 bis 7, **dadurch gekennzeichnet, dass** der mindestens eine wellige Abschnitt (2, 3, 4, 5, 10, 10', 10", 10"') einen glatten inneren rohrförmigen Abschnitt und einen welligen äußeren rohrförmigen Abschnitt umfasst, der die Reliefs (11) und die Hohlräume (12) definiert und der diesen inneren Abschnitt abdeckt und fest damit verbunden ist.

10. Rohr (1) nach einem der Ansprüche 1 bis 9, **dadurch gekennzeichnet, dass** die Reliefs (11) jeweils auf einer Querebene zentriert sind, die senkrecht zur Symmetrielängsachse des Rohres ist.

11. Rohr nach einem der Ansprüche 1 bis 9, **dadurch gekennzeichnet, dass** die Reliefs jeweils auf einer Ebene zentriert sind, die mit der Symmetrielängsachse des Rohres einen Winkel bildet, der zwischen π/5 und π/2 Radianten enthalten ist.

12. Verfahren zur Herstellung eines Rohres (1) nach einem der vorhergehenden Ansprüche, **dadurch gekennzeichnet, dass** es ein Formen durch Extrusionsblasen von mindestens einem Plastomer und/oder thermoplastischen Elastomer aus einem Extruder (31) in Richtung einer Form mit zwei beweglichen halbzylindrischen Dauerformen (33a und 33b) umfasst, wobei diese Dauerformen eine axiale Ausformebene für das Rohr definieren.

## Claims

1. Fluid transfer pipe (1) in particular for filling a cooling circuit of a motor vehicle heat engine, comprising at least one single-layer or multilayer corrugated bendable portion (2, 3, 4, 5, 10, 10', 10", 10"') which is based on at least one thermoplastic material and which comprises a succession of radial reliefs (11) which are axially spaced so as to form hollows (12) between them, each relief having two frontal regions (13 and 14) linked together by an intermediate region (18), the frontal regions of each relief each having one and the same overall polygonal contour (15) defining at least three straight sections (16) interlinked by rounded sections (17), and the contours of these successive reliefs being adapted to allow for the stripping of said at least one corrugated portion from two hemicylindrical shells (33a and 33b) of a mould along a single axial stripping plane, **characterized in that**, at the level of said rounded sections of each relief, said two frontal regions meet in said intermediate region by forming, for each relief n, n being an integer equal to or greater than 3, discontinuous convex bulges (19, 19', 19", 19"') which are substantially in the form of a circular arc in the circumferential and axial directions.

2. Pipe (1) according to Claim 1, **characterized in that** the respective contours (15) of said reliefs (11) are identical and angularly offset from one relief to another.

3. Pipe (1) according to Claim 2, **characterized in that** the contour (15) of each relief (11) substantially defines a convex regular polygon with n sides (16) (n being an integer equal to or greater than 3) and with n truncated summits formed by said rounded sections (17), and **in that** the reliefs follow one another in alternation according to one and the same angular offset (α) of π/n radians by defining two angular positions for the polygons (15) of all of these reliefs.

4. Pipe (1) according to Claim 3, **characterized in that** the contours (15) of said reliefs (11) each have an even number n of sides (16), being, for example, truncated squares offset in alternation according to an angle (α) of π/4 radians or else truncated regular hexagons offset according to an angle (α) of π/6 radians.

5. Pipe (1) according to one of the preceding claims, **characterized in that**, at the level of said straight sections (16), the frontal regions of each relief are coplanar and form flats (20, 20', 20", 20"') defining n discontinuous bottoms of each hollow (12) separating two said consecutive bulges from one another in the circumferential direction.

6. Pipe (1) according to one of the preceding claims, **characterized in that** said reliefs (11) are separated two-by-two from one another by an interstitial peripheral smooth portion (21) of said at least one corrugated portion (2, 3, 4, 5, 10, 10', 10", 10"'), these reliefs not having any axial bridges linking them together two-by-two.

7. Pipe (1) according to one of the preceding claims, **characterized in that** it is moulded by extrusion blow-moulding of at least one plastomer and/or thermoplastic elastomer in a mould with two shells (33a and 33b) defining an axial stripping plane for the pipe.

8. Pipe (1) according to one of the preceding claims, **characterized in that** said at least one corrugated portion (2, 3, 4, 5, 10, 10', 10", 10"') comprises an internal layer for example made of a thermoplastic elastomer and an external layer for example made of a plastomer, all the layers of this corrugated portion having said reliefs (11) and said hollows (12).

9. Pipe (1) according to one of Claims 1 to 7, **characterized in that** said at least one corrugated portion (2, 3, 4, 5, 10, 10', 10", 10"') includes a smooth internal tubular portion and a corrugated external tubular portion which defines said reliefs (11) and said hollows (12) and which covers said internal portion by being attached thereto.

10. Pipe (1) according to one of Claims 1 to 9, **characterized in that** said reliefs (11) are each centred on a transversal plane perpendicular to the longitudinal axis of symmetry of the pipe.

11. Pipe according to one of Claims 1 to 9, **characterized in that** said reliefs are each centred on a plane forming with the longitudinal axis of symmetry of the pipe an angle of between π/6 and π/2 radians.

12. Method for manufacturing a pipe (1) according to one of the preceding claims, **characterized in that** it comprises a moulding by extrusion blow-moulding of at least one plastomer and/or thermoplastic elastomer from an extruding machine (31) to a mould with two mobile hemicylindrical shells (33a and 33b), these shells defining an axial stripping plane for the pipe.
